# EUROPÄISCHE PATENTSCHRIFT

(11) **EP 1 447 006 B1**
(45) Veröffentlichungstag und Bekanntmachung des Hinweises auf die Patenterteilung: **23.08.2006**
(21) Anmeldenummer: 04002721.1
(22) Anmeldetag: 06.02.2004
(51) Int. Cl.: A21C 11/16

(54) **Portioniervorrichtung für Nahrungsmittel**
Portion-metering device for food products
Dispositif de dosage pour produits alimentaires

(30) Priorität: 07.02.2003 DE 20301908 U
(43) Veröffentlichungstag der Anmeldung: 18.08.2004
(73) Patentinhaber: VEMAG MASCHINENBAU GmbH, 27283 Verden/Aller (DE)
(72) Erfinder: Scharninghausen, Gerd, 27308 Kirchlinteln-Armsen (DE); Dammand, Rene, 8700 Horsens (DK)
(74) Vertreter: Eisenführ, Speiser & Partner

(56) Entgegenhaltungen:
- EP-A- 0 484 707
- DE-A- 19 616 345
- US-A- 4 737 092
- US-A- 5 888 558

## Beschreibung

Die Erfindung betrifft eine Portionierungsvorrichtung zum Portionieren von pastöser Masse, insbesondere Fleischbrät, Teige oder dgl., mit einen von einem Wandabschnitt zum Formen der Masse begrenzten Formraum, in den die Masse einfüllbar ist, und der eine Ausgabeöffnung aufweist, durch welche die portionierte Masse ausgebbar ist. Eine derartige Vorrichtung ist beispielsweise aus EP-A-484 707 bekannt.

Portioniervorrichtungen dieser Art sind bekannt. Sie dienen zum Portionieren von pastösen Massen wie Brät, Teig oder anderen Nahrungsmitteln, insoweit wird nachstehend auch von Produkt, Masse oder Nahrungsmittel gesprochen. Eine aus EP 0 818 148 B1 bekannte Portioniervorrichtung umfasst eine Formplatte, in der mehrere Vertiefungen oder Ausnehmungen eingearbeitet sind. In diese Vertiefungen oder Ausnehmungen ist die Masse einfüllbar und kann nach dem Einfüllen durch eine Press- und Abstreifvorrichtung so verdichtet und verteilt werden, dass es die Ausnehmungen bzw. Vertiefungen vollständig ausfüllt. Hierauf folgend wird das so portionierte Produkt als Produktportion mit einem Stempel auf ein Förderband ausgeworfen oder durch Abheben der Formplatte von einem Förderband aus der Formplatte freigesetzt und kann dann durch Fortbewegen des Förderbands weiteren Verarbeitungsschritten zugeführt werden. Die zuvor beschriebene Vorrichtung wird insbesondere verwendet, um portionierte Fleischprodukte zur Zubereitung von Hamburgern, Frikadellen o.ä. herzustellen.

Ein Nachteil des bekannten Verfahrens ist, dass es zur vollständigen und gleichförmigen Ausformung der Frikadelle erforderlich ist, einen Überschuss an Fleischprodukt in die Ausnehmung bzw. die Vertiefung einzufüllen und hernach mittels einer Abstreifvorrichtung dieses überschüssige Produkt zu entfernen, um dadurch zugleich eine glatte Oberfläche der Frikadelle und eine Portionsbemessung zu erzielen. Es ist aufgrund der erforderlichen hygienischen Anforderungen zu aufwendig, das abgestreifte Produktmaterial zurück zu gewinnen, so dass dieses überschüssige, abgestreifte Produktmaterial regelmäßig verworfen wird. Dadurch entsteht ein unvorteilhafter Produktverlust, der zu erhöhten Betriebs- und Herstellungskosten führt. Darüber hinaus ist es zur Ressourcenschonung erforderlich, unnötige Verluste an Nahrungsmitteln zu vermeiden.

Die bekannten Vorrichtungen weisen weiterhin den Nachteil auf, dass zur Herstellung von Fleischprodukten unterschiedlicher Abmessungen die Anfertigung von Formplatten mit Ausnehmungen bzw. Vertiefungen der entsprechenden Abmessungen erforderlich ist. Diese Formplatten sind aufwendig in der Herstellung und verursachen daher hohe Produktionskosten.

Eine weitere, nachteilhafte Eigenschaft der bekannten Vorrichtung ist, dass bei dem Abstreifvorgang regelmäßig ein Gleitmittel benötigt wird und eine Verschmutzung der Formplatte und der gesamten Vorrichtung auftritt, wodurch eine aufwendige Reinigung dieser Bauteile erforderlich wird. Hierzu wird ständig Wasser als Schmier- und Reinigungsflüssigkeit in den Bereich der Formplatte und Abstreifvorrichtung gefördert, um Produktreste fortzuspülen. Dies ist relativ ineffizient und "unsauber". Die Reinigung ist ferner kostenintensiv und verursacht weiteren Verlust an dem zu portionierenden Produkt.

Der Erfindung lag daher die Aufgabe zu Grunde, eine Portioniervorrichtung und eine Füllvorrichtung bereitzustellen, welche eine materialsparendere Portionierung von Produkten ermöglichen als bekannte Vorrichtungen.

Die Aufgabe wird erfindungsgemäß durch eine Portioniervorrichtung der eingangs genannten Art gelöst, die eine Schneidvorrichtung zum Portionieren der in den Formraum eingefüllten Masse umfasst, welche einen Schneidkörper aufweist, der mindestens teilweise in den Formraum einführbar ist.

Das Einführen eines Schneidkörpers in den Formraum bewirkt die Ausbildung einer Masse- oder Produktportion unter Verminderung von Produktabfall, da hierdurch das Erfordernis des Abstreifens von überschüssigem Produktmaterial vermieden werden kann. Die Produktportion kann nach der Abtrennung durch die Schneidvorrichtung zunächst im Formraum verbleiben und wird dabei durch die den Formraum begrenzenden Wände gestützt. Anschließend wird die Masse weitergefördert und bei der nächsten Portionierung wird die Produktportion ausgeworfen, um der weiteren Verarbeitung zugeführt zu werden. Es hat sich ferner gezeigt, dass auf eine ständige Zufuhr einer Reinigungsflüssigkeit im Betrieb verzichtet werden kann, was zu einem "saubereren" Verfahren und geringeren Betriebskosten führt.

Eine erste vorteilhafte Ausführungsform zeichnet sich dadurch aus, dass der Schneidkörper in einer Richtung in den Formraum einführbar ist, welche etwa senkrecht zu der Einfüllvorrichtung des Nahrungsmittels in den Formraum liegt. Die Ebene, in der sich der Schneidkörper bewegt, liegt somit senkrecht zu der Einführrichtung des Produkts in den Formraum. Hierdurch wird die Herstellung von scheibenförmigen Produktportionen vereinfacht. Die Verwendung eines Schneidkörpers, der etwa senkrecht zu der Einfüllvorrichtung des Nahrungsmittels in den Formraum in diesen einführbar ist, ermöglicht darüber hinaus als weiteren Vorteil gegenüber dem Stand der Technik einen weitgehend kontinuierlichen Betrieb der erfindungsgemäßen Portioniervorrichtung. Dabei wird in sich wiederholender Weise Produkt in den Formraum eingefüllt, durch Einführen des Schneidkörpers durch Schneiden portioniert, und schließlich durch erneutes Einfüllen von Produkt aus dem Formraum ausgeworfen. Insbesondere zum Herstellen von gleichmäßigen Hackfleischportionen ist die Erfindung besonders gut geeignet.

Bei einer weiteren vorteilhaften Ausführungsform weist der Formraum eine Einfüllöffnung auf, durch welche das Produkt in den Formraum einfüllbar ist. Bei dieser Ausführungsform wird das Produkt daher durch eine andere Öffnung als die Ausgabeöffnung eingefüllt, durch die die Produktportionen ausgebbar ist. Diese Ausführungsform ist insbesondere vorteilhaft in Verbindung mit der zuvor beschriebenen senkrecht zur Einfüllrichtung stattfindenden Einführbewegung des Schneidkörpers, um dadurch einen schnellen getakteten Durchlaufbetrieb der Portioniervorrichtung zu erzielen

Bei einer weiteren vorteilhaften Ausführungsform weist der Formraum einen der Form des Endproduktes angepasste Geometrie auf, insbesondere eine im Querschnitt im Wesentlichen rotationssymmetrische oder ovale Geometrie, oder insbesondere einen Querschnitt, der dem Querschnitt von Spare-Ribs entspricht. Selbstverständlich kann der Formraum aber andere, nahezu beliebige Formen annehmen, um Produktportionen in beliebiger Gestalt portionieren zu können. Bei dieser Ausführungsform kann der Formraum beispielsweise an die Kontur der Frikadellen (hinsichtlich einer Draufsicht) für Hamburger oder an die Kontur von Spare-Ribs (hinsichtlich deren Querschnitt) oder (Chicken-) Nuggets oder Riegel mit im wesentlichem rechteckigen Querschnitt weiter angepasst werden, wodurch eine endkonturnahe Ausformung und Portionierung des Produkts erreicht wird. Dadurch können nachfolgende Verarbeitungsschritte, in denen eine Nachausformung vorgenommen würde, entfallen und eine rationelle Fertigung wird ermöglicht.

Es ist weiterhin vorteilhaft, wenn der Formraum innerhalb eines Rohres gebildet ist, durch welches das Produkt axial hindurchförderbar ist. Dadurch wird eine gute Ausformung des Produktes während der Förderung und gleichzeitig eine leichte Reinigung der Vorrichtung erreicht. Insbesondere kann bei dieser Ausführungsform die Produktportion weiterhin eine Teilstrecke innerhalb des Rohres gefördert werden und wird dadurch auch nach der Portionierung gestützt und gegebenenfalls nachgeformt. Ferner kann ein solches Rohr einfach hergestellt und ausgetauscht werden, etwa um andere Produktformen- oder -größen erreichen zu können.

Bei einer weiteren vorteilhaften Ausführungsform weist die den Formraum begrenzende Wand einen Schlitz auf, in welchen der Schneidkörper einführbar ist. Der Schlitz hat vorzugsweise eine Breite, welche die Dicke des Schneidkörpers geringfügig überschreitet, so dass der Schneidkörper einerseits gut in den Schlitz eingeführt werden kann und andererseits vermieden wird, dass Teile des Produktes durch den Schlitz nach außen treten. Die Längsrichtung des Schlitzes ist vorzugsweise senkrecht zu der Richtung ausgerichtet, in welcher die separierte Produktportion aus dem Formraum ausgebbar ist.

Die vorgenannte Ausführungsform wird weiter fortgebildet, indem der Schlitz sich so weit erstreckt, dass der Schneidkörper den Querschnitt des Formraums vollständig durchtrennen kann. Die Abmessungen des Schlitzes bestimmen sich im Wesentlichen nach der Bewegungsform, die der Schneidkörper ausführt, wenn er durch den Schlitz in den Formraum eingeführt wird und nach den geometrischen Abmessungen des Schneidkörpers und des Formraums. Wird der Schneidkörper mit einer etwa unaxialen, translatorischen Bewegung eingeführt, so muss er, um ein in dem Formraum befindliches Produkt vollständig zu durchtrennen, regelmäßig mindestens eine Längsabmessung aufweisen, die der Abmessung des Formraums quer zur Bewegungsrichtung des Schneidkörpers in der Schneidebene entspricht. Hieraus folgend muss in diesem Fall auch der Schlitz mindestens eine entsprechende Längsabmessung aufweisen, um dem Schneidkörper die vollständige Durchtrennung zu ermöglichen.

Eine weitere vorteilhafte Ausführungsform der Erfindung ist eine Portioniervorrichtung mit den Merkmalen des Anspruchs 8. Bei dieser Ausführungsform wird, sofern der Schneidkörper, wie zuvor ausgeführt, durch einen Schlitz in den Formraum einführbar ist, die entsprechende Stelle durch die Lage des Schlitzes bestimmt. Die Stützung der Nahrungsmittelportion durch zumindest einen Teil des Wandabschnitts ist vorteilhaft, um zu vermeiden, dass bei dem Einführen des Schneidkörpers eine Verformung der Produktportion auftritt. Es ist insbesondere vorteilhaft, wenn die Produktportion beim Einführen des Schneidkörpers möglichst umfassend gestützt wird. Dabei kann vorgesehen werden, dass Teile des Wandabschnitts zur Entnahme der Produktportion wegbewegt, zum Beispiel verschwenkt oder verschoben, werden können. Das erforderliche Maß an Stützung der Produktportion ist insbesondere auf die Konsistenz und Festigkeit des zu portionierenden Produktes abzustimmen.

Die vorgenannte Ausführungsform kann in vorteilhafter Weise weitergebildet werden, indem der Schlitz so von der Ausgabeöffnung beabstandet ist, dass zwischen diesen Öffnungen ein Formraumabschnitt angeordnet ist, welcher mindestens etwa der Portionsgröße der Produktportion entspricht. Bei dieser Ausführungsform kann zwischen der Einführöffnung, dass heißt z. B. dem Schlitz, und der Ausgabeöffnung beispielsweise genau eine Produktportion ausgebildet werden, wenn der Schneidkörper in den Formraum eingeführt wird. Diese wird dann beim Schneidvorgang durch die Wände des Formraumabschnitts zwischen den vorgenannten Öffnungen gestützt und kann nach Beendigung des Schneidvorgangs entnommen/ausgeworfen werden. Diese Entnahme bzw. der Auswurf der Produktportion wird durch die vorteilhafte Beabstandung der Ausgabeöffnung von dem Schlitz besonders vereinfacht.

Die erfindungsgemäße Portioniervorrichtung kann weiter fortgebildet werden, indem die den Formraumabschnitt begrenzende Wand zylindrisch ist und der Schlitz die Wand fast vollständig durchdringt. Dabei kann sich der Schlitz beispielsweise etwa 180°-350°, besonders bevorzugt 210°-350° über dem Umfang der Wand erstrecken und dadurch eine besonders einfache Einführbewegung des Schneidkörpers ermöglichen. Zugleich erlaubt eine solche Ausbildung des Schlitzes eine besonders einfache Reinigung der erfindungsgemäßen Portioniervorrichtung, was insbesondere dann vorteilhaft ist, wenn die Portioniervorrichtung zur Portionierung von Nahrungsmitteln verwendet wird.

Eine weitere vorteilhafte Ausführungsform zeichnet sich dadurch aus, dass die Einführbewegung des Schneidkörpers in den Formraum in einer Ebene erfolgt. Auf diese Weise wird eine in häufigen Anwendungen gewünschte, glatte und flache Schnittkante der Produktportion erzielt. Darüber hinaus wird die Bewegung des Schneidkörpers vereinfacht, sie kann beispielsweise als Rotation um eine feststehende Achse oder als Translation erfolgen.

Der Schneidkörper kann in vorteilhafter Weise als zweiflügeliges, rotierbares Messer ausgebildet sein. Diese Ausführungsform ist insbesondere dann zu bevorzugen, wenn der Schneidkörper ohne Drehrichtungsumkehr in den Formraum eingeführt und wieder herausgeführt werden soll, d. h. insbesondere dann, wenn ein Schlitz, durch den der Schneidkörper einführbar (und ausführbar) ist, so bemessen ist, dass der Schneidkörper aus einer ersten Richtung kommend durch den Schlitz in den Formraum eintreten kann und dann unter Fortführung der Rotationsbewegung in einer zweiten Richtung durch einen anderen Abschnitt des Schlitzes aus dem Formraum wieder austreten kann. Die Standzeit des Schneidkörpers kann dabei erhöht werden, indem das Messer zweiflügelig ausgebildet wird und es ist lediglich eine Drehung um 180° für einen Portionier- und Abtrennvorgang erforderlich. Weiterhin sind auch Ausführungsformen mit mehr als zwei Flügeln für bestimmte Anwendungen vorteilhaft, insbesondere dann, wenn Produkte zu portionieren sind, die eine hohe Schnittleistung erfordern und eine hohe Abnutzung des Schneidkörpers bewirken.

Eine weitere vorteilhafte Ausführungsform der erfindungsgemäßen Portioniervorrichtung ist durch die Merkmale des Anspruchs 13 gekennzeichnet. Die Befestigungsmittel können dabei insbesondere einen Verbindungsflansch umfassen, der beispielsweise mittels Bajonettverschluss, Gewinde- oder Klemmverschluss oder ähnlichem eine Befestigung ermöglicht. Die erfindungsgemäße Portioniervorrichtung kann auf diese Weise unmittelbar mit einer Förder-/Zerkleinerungsvorrichtung zusammenwirken, etwa Füllmaschine für Wurstmasse oder einem Fleischwolf oder einer Füllmaschine mit nachgeschaltetem Fleischwolf. Dabei kann weiterhin vorgesehen sein, dass die Bewegung des Schneidkörpers in Abhängigkeit der Förderungs/Zerkleinerungsleistung der angekoppelten Vorrichtung gesteuert wird, beispielsweise durch mechanische Verkoppelung des Förder/Zerkleinerungswerks der Vorrichtung mit der Schneidvorrichtung oder durch eine Steuerungseinheit, welche die Förder-/Zerkleinerungsleistung erfasst oder steuert und dementsprechend die Bewegung der Schneidvorrichtung intermittierend steuert. Insbesondere bei Anordnung der erfindungsgemäßen Schneidvorrichtung nach einem Fleischwolf und bei rechtwinkliger Anordnung der Schnittebene des Messers der Schneidvorrichtung ergibt sich ein weiterer Vorteil dadurch, dass die in dem Fleischwolf entstehende Ausrichtung oder Struktur des Fleisches auch nach der Trennung mittels der Schneidvorrichtung weitgehend erhalten bleibt, so dass das Produkt ein besseres Gefüge oder eine bessere Struktur aufweist gegenüber herkömmlichen Herstellungsverfahren.

Ein weiterer Aspekt der Erfindung ist eine Vorrichtung zum Fördern und/oder Zerkleinern von Produkten, insbesondere Fleischprodukten, welche eine Portioniervorrichtung nach einer der vorangegangen erläuterten Ausführungsweisen umfasst.

Die Förder- und/oder Zerkleinerungsvorrichtung der vorgenannten Art kann weiter fortgebildet werden durch ein Plättband, welches das portionierte Produkt aufnehmen kann und das mit mindestens einer Formfläche zusammenwirkt zum Nachausformen des portionierten Produkts.

Bei dieser Ausführungsform wird eine unerwünschte Verformung des Produkts, welche beim Schneidvorgang auftreten kann, korrigiert. Weiterhin ist diese Ausführungsform geeignet, um Produktportionen mit sehr exakten und glattflächigen Oberflächen herzustellen. Das Produkt wird dabei auf dem Plättband gefördert und zwischen Plättband und einer Formfläche gepresst und/oder durch das Plättband zwischen zwei etwa gegenüberliegende Formflächen eingeführt und an diesen entlang bewegt, um dabei eine Nachausformung des portionierten Produkts zu erreichen.

Eine weitere vorteilhafte Ausführungsform weist Fördermittel zum Fördern des Produkts auf etwa in Form einer Flügelzellen- oder Doppelschraubenpumpe wobei die Fördermittel diskontinuierlich betreibbar sind und die Taktung des diskontinuierlichen Betriebs mit der Einführbewegung des Schneidkörpers in den Formraum zusammenwirkt. Bei dieser Weiterbildung können die Fördermittel somit in einem ersten Fördervorgang eines ersten Taktes den Formraum mit Produkt füllen und dieses Produkt hernach durch Einführen des Schneidkörpers abgetrennt und somit portioniert werden. Im nächsten Takt kann dann erneut durch die Fördermittel der Formraum gefüllt werden, wodurch die zuvor abgetrennt Produktportion aus dem Formraum durch die Ausgabeöffnung ausgeworfen wird. Das im zweiten Takt eingefüllte Produkt wird wiederum durch Abtrennung mittels des Schneidkörpers portioniert und es kann ein weiterer Takt beginnen. Die Zusammenwirkung wird vorzugsweise mittels einer Steuerung realisiert.
Die erfindungsgemäße Vorrichtung arbeitet vorteilhafter Weise nach einem Verfahren zum Portionieren von Produkten, insbesondere Fleischprodukten, mit den Verfahrensschritten: Einfüllen des Produkts in einen Formraum, Ausgeben des portionierten Produkts durch eine Ausgabeöffnung des Füll- und Formraums, wobei zwischen Einfüllen und Ausgeben ein Schneidkörper einer Schneidvorrichtung zum Portionieren des in den Formraum eingefüllten Produkts in den Formraum eingeführt wird. Das portionierte Produkt kann nach dem Ausgeben auf ein Plättband gefördert werden und auf dem Plättband durch Zusammenwirken von mindestens zwei Formflächen nachgeformt werden.

Eine bevorzugte Ausführungsform der Erfindung wird mit Bezugnahme zu den Figuren beschrieben. Darin zeigen:
- Figur 1: eine schematische Draufsicht auf eine Füllmaschine mit Fleischwolf und angeflanschter erfindungsgemäßer Portioniervorrichtung,
- Figur 2: eine teilgeschnittene Detailansicht der Figur 1, darstellend einen Formraum,
- Figur 3: eine Frontalansicht aus der in Figur 2 durch Pfeil kenntlich gemachten Richtung des Formraumbereichs,
- Figur 4: eine Frontalansicht des Schneidkörpers, und
- Figur 5: eine Draufsicht auf den Schneidkörper der Figur 4.

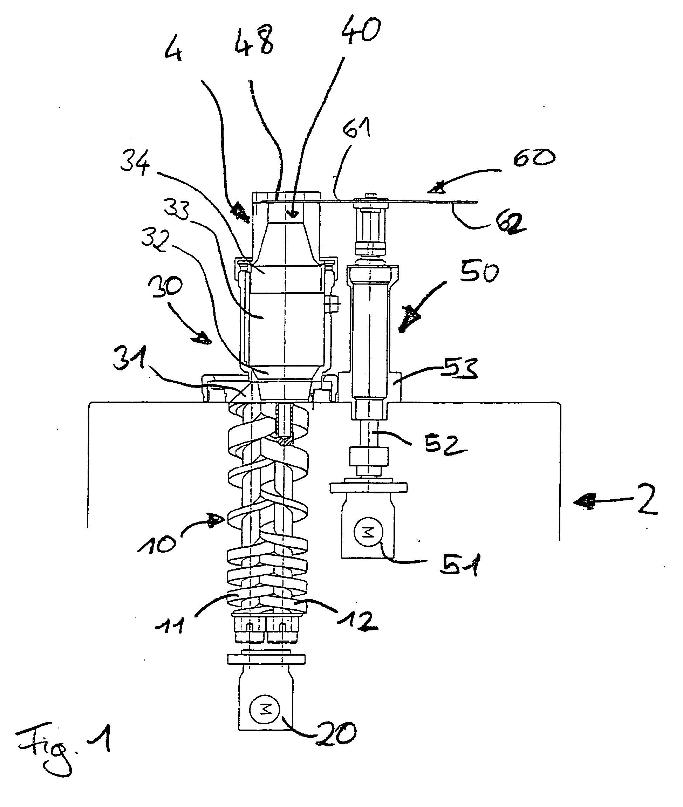

Die teilweise dargestellte Füllmaschine 2 mit angekoppeltem Fleischwolf gemäß Figur 1 weist eine Fördervorrichtung mit einem Förderbereich 10 mit zwei gegenläufig rotierbaren Förderschnecken 11, 12 auf, die durch einen Motor 20 angetrieben werden. Der Motor 20 kann als beispielsweise ein Hydromotor oder ein Elektromotor sein und ist an einem Antriebsende der Förderschnecken 11, 12 angeordnet. An dem dem Antriebsende gegenüberliegenden Ende ist ein Fleisch-Wolf 30 an die Füllmaschine 2 angekoppelt. Des Wolf 30 weist an seiner zu den Förderschnecken 11, 12 weisenden Seite einen Aufnahmetrichter 31 auf, der sich konisch vom Ende der Förderschnecken 11, 12 ausgehend in Förderrichtung verengt.

Anstelle der Antriebsvorrichtung in Form der angetriebenen Förderschnecken sind auch andere, dem Fachmann geläufige Fördervorrichtungen, beispielsweise Förderpumpen, Flügelzellen o.ä. für bestimmte Anwendungen vorteilhaft.

Der Aufnahmetrichter 31 mündet in einen gehäuseartigen Rohrabschnitt 32, 33. Der Rohrabschnitt 32, 33 weist in Förderrichtung gesehen zunächst eine konische Erweiterung 32 auf, an welche sich ein im Querschnitt gleichbleibender zylindrischer Abschnitt 33 anschließt. In nicht dargestellter Weise sind innerhalb der gehäuseartigen Rohrabschnitte 32, 33 des Wolfes 30 Lochscheiben und rotierende Messer angeordnet, die mit einer der Förderschnecken 12 gekoppelt sind, um mittels des Motors 20 angetrieben werden zu können.

An dem der konischen Erweiterung 32 gegenüberliegenden Ende 34 des Rohrabschnitts 32, 33 ist eine Portioniervorrichtung 4 befestigt, die unten näher beschrieben ist.

Seitlich neben den Förderschnecken 11, 12 und dem Förderrohr 30 mit daran befestigter Portioniervorrichtung ist eine Schneidvorrichtung 50 angeordnet und an der Füllmaschine 2 befestigt. Die Schneidvorrichtung 50 umfasst einen Hydro- oder Elektromotor 51, dessen Drehachse parallel zu der Drehachse des Motors 20 und der Schnecken 11, 12 angeordnet ist. Der Motor 51 treibt eine Verbindungswelle 52 an. Die Verbindungswelle 52 ist in einem Lagergehäuse 53 drehbar gelagert. An dem dem Motor 51 gegenüberliegenden Ende der Verbindungswelle 52 ist ein Schneidkörper in Form eines Schneidmessers 60 lösbar befestigt.

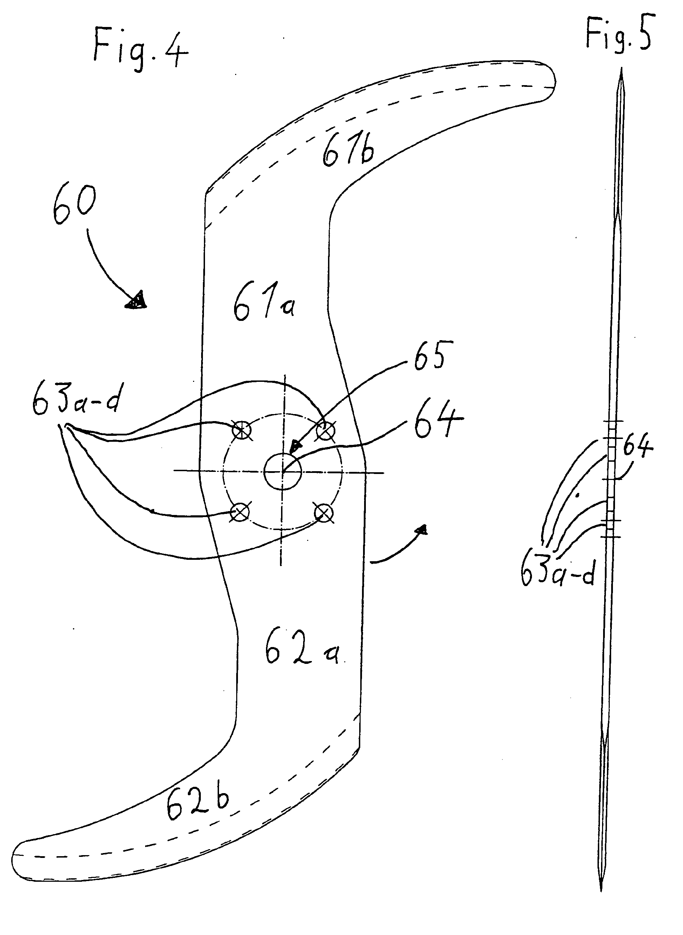

Das in Fig. 4 gezeigte Schneidmesser 60 weist zwei um 180° zueinander versetzte Schneidflügel 61, 62 auf. Das Schneidmesser 60 wird durch mehrere Schrauben (nicht dargestellt) die parallel und beabstandet zur Drehachse der Verbindungswelle 52 angeordnet sind, an der Verbindungswelle 52 befestigt. Alternativ kann das Schneidmesser 60 mittels anderer Befestigungsmethoden, beispielsweise mittels eines Bajonettverschlusses oder anderer Schnellverschlusskupplungen mit der Verbindungswelle verbunden sein, um einen schnellen Austausch des Schneidmessers zu ermöglichen.

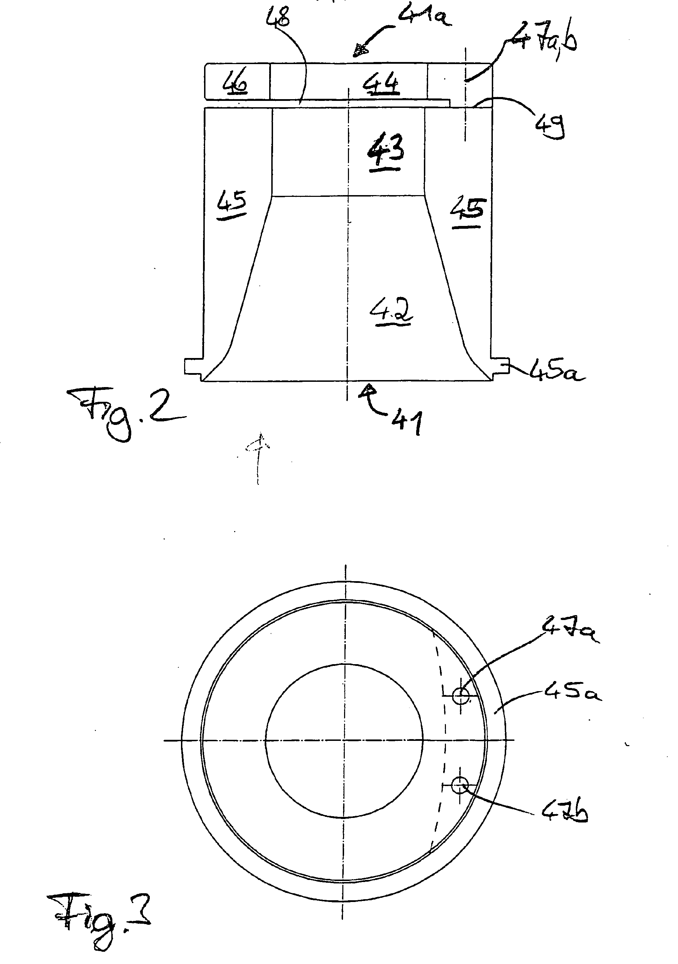

Der Formraum 40 der Portioniervorrichtung 4 weist, wie insbesondere aus Figur 2 gut zu erkennen, einen sich von einer Einfüllöffnung 41 aus konisch in Förderrichtung verjüngenden ersten Formraumabschnitt 42 auf. An den ersten Formraumabschnitt 42 schließt sich in Förderrichtung ein zweiter, zylindrischer Formraumabschnitt 43 an. An diesen zweiten Formraumabschnitt schließt sich wiederum in Förderrichtung ein dritter Förderraumabschnitt 44 an, der ebenfalls zylindrisch ist und dessen Durchmesser etwas größer ist als derjenige des zweiten Formraumabschnitts 43.

Die Länge des zweiten Formraumabschnitts 43 in Förderrichtung des Produkts muss so lang gewählt werden, dass eine ausreichende Formstabilität der Masse oder des Produkts entsteht, so dass das Produkt nach Verlassen des Formraumabschnitts 43 seinen Querschnitt nicht oder nur geringfügig ändert und im Wesentlichen den Querschnitt des Formraumabschnitts 43 beibehält. Die für diese Formstabilität erforderliche Länge des zweiten Formraumabschnitts 43 hängt dabei insbesondere von dem Umformungsgrad des Produkts innerhalb des ersten Formraumabschnitts 42 oder beim Eintritt aus dem ersten Formraumabschnitt 42 in den zweiten Formraumabschnitt 43, den Materialeigenschaften des Produkts und der Fördergeschwindigkeit ab. Grundsätzlich muss mit steigendem Umformgrad, steigender Fördergeschwindigkeit und steigender Elastizität, abhängig von der Portionsgröße, eine größere Länge des zweiten Formraumabschnitts 43 gewählt werden. Die Länge darf jedoch nicht beliebig erhöht werden, da bei großen Längen die Eigenschaften des Produkts z. B. infolge von starker Verdichtung und Pressung negativ verändert werden.

Der erste und zweite Formraumabschnitt 42, 43 werden von einer im Wesentlichen rotationssymmetrischen Wand 45 begrenzt. Die Wand 45 weist im Bereich der Einfüllöffnung 41 an ihrem äußeren Umfang einen umlaufenden Steg auf, der zur einfachen und lösbaren Befestigung der Portioniervorrichtung 4 an einem Fleischwolf 30 oder direkt an einer Füllmaschine 2 dient.

Der dritte Formraumabschnitt 44 wird von einer zylindrischen Wand 46 begrenzt, welche durch eine parallel zur und entgegen der Förderrichtung einschraubbare Schraube (schematisch dargestellt durch unterbrochene Linie 47a, b) an der Wand 45 befestigt wird. Wand 45 und 46 können alternativ auch einstückig hergestellt sein. Die Wand 46 weist an seiner zu der Wand 45 weisenden Fläche eine Ausnehmung 48 auf. Bei Befestigung der Wand 46 an der Wand 45 bildet sich dadurch ein Schlitz 48 zwischen dem zweiten und dritten Formraumabschnitt aus, der sich bis auf einen kleinen Bereich 49 über die gesamte Grenzfläche zwischen den Wänden 45, 46 erstreckt. Insbesondere erstreckt sich der Schlitz 48 über den gesamten Querschnitt der Formraumabschnitte 43, 44. Aus der dem Schlitz gegenüberliegenden Seite des dritten Formraumabschnitts 44 ist eine Ausgabeöffnung 41 a ausgebildet.

Figur 3 zeigt eine Ansicht des Formbereichs gemäß Figur 2 in Draufsicht auf die Einfüllöffnung 41. Darin können die schematisch eingezeichneten (eigentlich nicht zu erkennenden) Bohrungen 47a, b erkannt werden, welche zur Befestigung der Wand 46 an der Wand 45 dienen.

Das Schneidmesser 60 der Schneidvorrichtung 50 wird, wie gut den Figuren 4 und 5 entnehmbar ist, mittels vier Schrauben, die durch Bohrungen 63a-d durchgesteckt werden können, an der Verbindungswelle 52 befestigt. Die Bohrungen 63a-d sind beabstandet von der Rotationsachse der Verbindungswelle 52, welche mit der Rotationsachse 64 des Schneidmessers zusammenfällt, und jeweils um 90° zueinander versetzt. Auf diese Weise kann ein hohes Drehmoment von der Verbindungswelle 52 auf das Schneidmesser 60 übertragen werden.

Zwischen den Flügelabschnitten 61 a, 62a und konzentrisch zur Rotationsachse 64 weist das Schneidmesser 60 eine Bohrung 65 auf, die zur Zentrierung des Schneidmessers auf der Verbindungswelle 52 dient.

Das Schneidmesser 60 weist zwei rotationssymmetrisch zur Rotationsachse 64 ausgebildete Schneidflügel 61, 62 auf. Jeder Schneidflügel 61, 62 weist einen ersten Flügelabschnitt 61 a, 62a auf, der sich geradlinig und radial zu der Rotationsachse 64 erstreckt. Der erste Flügelabschnitt 61a, 62a geht in einen zweiten Messerabschnitt 61 b, 62b über, der sich abgewinkelt zu dem ersten Flügelabschnitt 61 a, 62a erstreckt. Das Schneidmesser 60 dreht sich entgegen dem Uhrzeigersinn in der Ansicht der Figur 4.

Der Anschliff des Schneidmessers, dargestellt durch die unterbrochenen Linien in Figur 4 und Figur 5, weist in Drehrichtung dem Formraum zu und ist symetrisch ausgeführt, so dass keine seitlichen, axialen Kräfte bezogen auf die Rotationsachse 64 auf die Produkt-Masse und das Schneidmesser ausgeübt werden.

Die Dicke des in Figur 5 dargestellten Schneidmessers 60 bestimmt die Tiefe der Ausnehmung 48 bzw. die Breite des Schlitzes 48, der zwischen den Wandabschnitten 45, 46 ausgebildet wird. Dieser Schlitz 48 muss, um eine leichte Einführbarkeit des Schneidmessers 60 in den vom Raum 42, 43, 44 zu gewährleisten, eine geringfügig größere Abmessung haben als die Dicke des Schneidabschnitts 61 b, 62b des Schneidmessers 60.

Die Schneidabschnitte 61 b, 62b des Schneidmessers 60 sollen eine möglichst geringe Dicke aufweisen, um ein gutes Schneidergebnis zu erzielen. Die Dicke der Schneidabschnitte 61 b, 62b und des Schneidmessers muss jedoch so hoch gewählt werden, um eine ausreichende Stabilität des Messers beim Durchtrennen des Produkts zu gewährleisten. Die Dicke der Schneidabschnitte 61b, 62b und des Schneidmessers muss daher den Materialeigenschaften des Produkts angepasst werden und ist umso höher zu wählen, je fester oder je inhomogener das Produkt ist.

Die Betriebsweise der Erfindung ist wie folgt: Produkt wie pastöse Wurstmasse wird mittels der Förderschnecken 11, 12 aus einem nicht dargestellten Fülltrichter in den Wolf 30 gefördert (siehe Figur 1) und dort zerkleinert. Die Wurstmasse gelangt durch Einfüllöffnung 41 in den Formraum 40 der Portioniervorrichtung 4 und wird dort nach Durchströmen des sich konisch verjüngenden ersten Formraumabschnitts 42 in dem zweiten Formraumabschnitt 43 in die gewünschte Form gebracht, im Ausführungsbeispiel eine zylindrische Form. Es sind jedoch alternativ auch abweichende Formen, beispielsweise elliptische, rechteckige oder quadratische Formen des Formraums 40 möglich. Mittels der Schneidvorrichtung 50, die intermittierend von einer nicht dargestellten zentralen Steuerungseinheit gesteuert und angetrieben wird, wird das Produkt durch Hindurchfahren der Schneidflügel 61, 62 durch den Schlitz 48 vollständig durchtrennt und dadurch portioniert. Eine so abgetrennte Produktportion wird im weiteren Ablauf zunächst im Bereich des dem Schlitz in Strömungsrichtung nachgeschalteten Abschnitts 44 von der dortigen Wand 46 gestützt. Anschließend wird diese Produktportion aufgrund der intermittierenden Weiterförderung der nachkommenden Wurstmasse mithilfe der Förder-Pumpe aus dem Abschnitt 44 durch die Austrittsöffnung 41 a ausgestoßen und fällt auf ein Förder- oder Transportband.

## Patentansprüche

1. Portioniervorrichtung zum Portionieren von pastöser Masse, insbesondere Fleischbrät, Teige oder dgl., umfassend
einen von einem Wandabschnitt zum Formen der Masse begrenzten Formraum (40),
in den die Masse einfüllbar ist, und
der eine Ausgabeöffnung (41a) aufweist, durch welche die portionierte Masse ausgebbar ist,
**gekennzeichnet durch**
eine Schneidvorrichtung (50) zum Portionieren der in den Formraum (40) eingefüllten Masse, welche einen Schneidkörper (60) aufweist, der mindestens teilweise in den Formraum (40) einführbar ist.

2. Portioniervorrichtung nach Anspruch 1,
**dadurch gekennzeichnet, dass** der Schneidkörper (60) in einer Richtung in den Formraum (40) einführbar ist, welche etwa senkrecht zu der Einfüllrichtung der Masse in den Formraum (40) liegt.

3. Portioniervorrichtung nach Anspruch 1 oder 2,
**dadurch gekennzeichnet, dass** der Formraum (40) eine Einfüllöffnung (41) aufweist, durch welche die Masse in den Formraum (40) einfüllbar ist.

4. Portioniervorrichtung nach einem der vorhergehenden Ansprüche,
**dadurch gekennzeichnet, dass** der Formraum (40) einen der Form des Endproduktes angepasste Geometrie aufweist, insbesondere eine im Querschnitt im Wesentlichen rotationssymmetrische oder ovale Geometrie oder insbesondere einen Querschnitt aufweist, der dem Querschnitt von Spare-Ribs entspricht.

5. Portioniervorrichtung nach Anspruch 4,
**dadurch gekennzeichnet, dass** der Formraum (40) innerhalb eines Rohres gebildet ist, durch welchen die Masse axial hindurch förderbar ist.

6. Portioniervorrichtung nach einem der vorhergehenden Ansprüche,
**dadurch gekennzeichnet, dass** die den Formraum (40) begrenzende Wand einen Schlitz (48) aufweist, in welchen der Schneidkörper (60) einführbar ist.

7. Portioniervorrichtung nach Anspruch 6,
**dadurch gekennzeichnet, dass** der Schlitz (48) sich so weit erstreckt, dass der Schneidkörper (60) den Querschnitt des Formraums (40) vollständig durchtrennen kann.

8. Portioniervorrichtung nach einem der vorhergehenden Ansprüche,
**dadurch gekennzeichnet, dass** der Schneidkörper (60) an einer Stelle in den Formraum (40) einführbar ist, dass ein bei dem Einführen des Schneidkörpers (60) ausgebildete Masseportion zumindest durch einen Teil der Wand (46) gestützt wird.

9. Portioniervorrichtung nach Anspruch 8,
**dadurch gekennzeichnet, dass** der Schlitz (48) so von der Ausgabeöffnung (41a) beabstandet ist, dass zwischen Schlitz (48) und Ausgabeöffnung (41a) ein Formraumabschnitt (44) ausgebildet ist, welcher mindestens etwa der Portionsgröße einer Masseportion entspricht.

10. Portioniervorrichtung nach Anspruch 8 oder 9,
**dadurch gekennzeichnet, dass** die den Formraum (40) begrenzende Wand im Wesentlichen zylindrisch ist und der Schlitz (48) die Wand fast vollständig durchdringt.

11. Portioniervorrichtung nach einem der vorhergehenden Ansprüche,
**dadurch gekennzeichnet, dass** der Schneidkörper (60) als zweiflügeliges, rotierbares Schneid-Messer (60) ausgebildet ist.

12. Portioniervorrichtung nach einem der vorhergehenden Ansprüche,
**gekennzeichnet durch** Befestigungsmittel, mittels derer die Schneidvorrichtung als Vorsatz an einer Vorrichtung (2) zum Fördern und/oder Zerkleinern von Masse, insbesondere an einer Füllmaschine oder einem Füllwolf befestigbar ist.

13. Vorrichtung zum Fördern und/oder Zerkleinern von Masse, insbesondere Fleischbrät, Teige oder dgl., mit
einer Portioniervorrichtung (4), umfassend
einen von einem Wandabschnitt zum Formen der Masse begrenzten Formraum (40),
in den die Masse einfüllbar ist, und
der eine Ausgabeöffnung (41a) aufweist, **durch** welche die portionierte Masse ausgebbar ist,
**gekennzeichnet durch**
eine Schneidvorrichtung (50) zum Portionieren der in den Formraum (40) eingefüllten Masse, welche einen Schneidkörper (60) aufweist, der mindestens teilweise in den Formraum (40) einführbar ist.

14. Vorrichtung nach einem der vorhergehenden Ansprüche,
**gekennzeichnet durch** ein Plättband, welches die portionierte Masse aufnehmen kann und das mit mindestens einer Formfläche zusammenwirkt zum Nachausformen der portionierten Masse.

15. Vorrichtung nach einem der vorhergehenden Ansprüche,
**gekennzeichnet durch** Fördermittel zum Fördern der Masse, wobei die Fördermittel diskontinuierlich betreibbar sind und die Taktung des diskontinuierlichen Betriebs mit der Einführbewegung des Schneidkörpers (60) in den Formraum zusammenwirkt.

## Claims

1. A portioning device for portioning paste-like material, particularly sausage meat, doughs or the like, comprising
a shaping space (40) defined by a wall portion for shaping the material,
into which the material may be fed, and
which has an output opening (41a) through which the portioned material may be dispensed,
**characterised by**
a cutting device (50) for portioning the material fed into the shaping space (40), which cutting device has a cutting body (60) which is at least partially insertable into the shaping space (40).

2. A portioning device according to Claim 1,
**characterised in that** the cutting body (60) is insertable into the shaping space (40) in a direction which lies approximately perpendicular to the feed direction of the material into the shaping space (40).

3. A portioning device according to Claim 1 or 2,
**characterised in that** the shaping space (40) has a feed opening (41) through which the material may be fed into the shaping space (40).

4. A portioning device according to one of the preceding claims,
**characterised in that** the shaping space (40) has a geometry adapted to the shape of the end product, particularly a substantially rotationally symmetrical or oval geometry in cross-section, or particularly a cross-section which corresponds to the cross-section of spare-ribs.

5. A portioning device according to Claim 4,
**characterised in that** the shaping space (40) is formed within a tube through which the material is axially conveyable.

6. A portioning device according to one of the preceding claims,
**characterised in that** the wall defining the shaping space (40) has a slot (48) into which the cutting body (60) may be inserted.

7. A portioning device according to Claim 6,
**characterised in that** the slot (48) extends far enough for the cutting body (60) to be able to cut completely through the cross-section of the shaping space (40).

8. A portioning device according to one of the preceding claims,
**characterised in that** the cutting body (60) is insertable at one location into the shaping space (40), **in that** a portion of the material formed when the cutting body (60) is inserted is supported at least by part of the wall (46).

9. A portioning device according to Claim 8,
**characterised in that** the slot (48) is spaced from the output opening (41a) such that between the slot (48) and the output opening (41a) a shaping space portion (44) is formed which corresponds at least approximately to the portion size of a portion of material.

10. A portioning device according to Claim 8 or 9,
**characterised in that** the wall defining the shaping space (40) is substantially cylindrical and the slot (48) penetrates the wall almost completely.

11. A portioning device according to one of the preceding claims,
**characterised in that** the cutting body (60) is a two-bladed, rotatable cutting knife (60).

12. A portioning device according to one of the preceding claims,
**characterised by** fastening means, by means of which the cutting device may be fastened as auxiliary device to a device (2) for conveying and/or mincing material, particularly a filling machine or a mincing machine.

13. A device for conveying and/or mincing material, particularly sausage meat, doughs or the like, with
a portioning device (4), comprising
a shaping space (40) defined by a wall portion for shaping the material,
into which the material may be fed, and
which has an output opening (41a) through which the portioned material may be dispensed,
**characterised by** a cutting device (50) for portioning the material fed into the shaping space (40), which cutting device has a cutting body (60) which is at least partially insertable into the shaping space (40).

14. A device according to one of the preceding claims,
**characterised by** a smoothing belt which is able to receive the portioned material and cooperates with at least one shaping surface to re-shape the portioned material.

15. A device according to one of the preceding claims,
**characterised by** conveyor means for conveying the material, the conveyor means being operable discontinuously and the timing of the discontinuous operation cooperating with the insertion movement of the cutting body (60) into the shaping space.

## Revendications

1. Portionneuse destinée à diviser en portions des produits pâteux, en particulier la chair à saucisse, les pâtes ou produits similaires, comportant
un espace de formage (40), délimité par une partie de paroi destinée à former le produit pâteux,
dans lequel le produit pâteux peut être introduit, et
lequel comporte un orifice de distribution (41a), à travers lequel le produit pâteux divisé en portions peut sortir,
**caractérisée par**
un dispositif de coupe (50) destiné à diviser en portions le produit pâteux introduit dans l'espace de formage (40), lequel comporte un corps de coupe (60) qui peut être introduit au moins partiellement dans l'espace de formage (40).

2. Portionneuse selon la revendication 1, **caractérisée en ce que** le corps de coupe (60) peut être introduit dans l'espace de formage (40) dans une direction qui est perpendiculaire à la direction d'introduction du produit pâteux dans l'espace de formage (40).

3. Portionneuse selon la revendication 1 ou 2,
**caractérisée en ce que** l'espace de formage (40) comporte un orifice de remplissage (41), par lequel le produit pâteux peut être introduit dans l'espace de formage (40).

4. Portionneuse selon l'une quelconque des revendications précédentes, **caractérisée en ce que** l'espace de formage (40) a une géométrie qui est adaptée à la forme du produit final, en particulier une géométrie avec une section sensiblement à symétrie de révolution ou ovale, ou en particulier a une section qui correspond à la section d'une côte (spare-ribs).

5. Portionneuse selon la revendication 4, **caractérisée en ce que** l'espace de formage (40) est réalisé à l'intérieur d'un tube, à travers lequel le produit pâteux peut être poussé dans le sens axial.

6. Portionneuse selon l'une quelconque des revendications précédentes, **caractérisée en ce que** la paroi délimitant l'espace de formage (40) comporte une fente (48),
dans laquelle le corps de coupe (60) peut être introduit.

7. Portionneuse selon la revendication 6, **caractérisé en ce que** la fente (48) s'étend sur une largeur telle que le corps de coupe (60) peut séparer totalement la section de l'espace de formage (40).

8. Portionneuse selon l'une quelconque des revendications précédentes, **caractérisée en ce que** le corps de coupe (60) peut être introduit à un emplacement dans l'espace de formage (40), de telle sorte qu'une portion de produit pâteux, formée lors de l'introduction du corps de coupe (60), est supportée par au moins une partie de la paroi (46).

9. Portionneuse selon la revendication 8, **caractérisée en ce que** la fente (48) est située à distance de l'orifice de distribution (41a), de telle sorte qu'il se forme, entre la fente (48) et l'orifice de distribution (41a), un tronçon d'espace de formage (44) qui correspond au moins sensiblement à la taille d'une portion de produit pâteux.

10. Portionneuse selon la revendication 8 ou 9, **caractérisée en ce que** la paroi délimitant l'espace de formage (40) est sensiblement cylindrique et la fente (48) traverse presque complètement la paroi.

11. Portionneuse selon l'une quelconque des revendications précédentes, **caractérisée en ce que** le corps de coupe (60) est réalisé sous forme de couteau (60) rotatif à deux branches.

12. Portionneuse selon l'une quelconque des revendications précédentes, **caractérisée par** des moyens de fixation, par lesquels le dispositif de coupe peut être fixé comme outil frontal sur un dispositif (2) destiné à transporter et/ou hacher le produit pâteux, en particulier sur une machine de remplissage ou un hachoir de remplissage.

13. Dispositif destiné à transporter et/ou hacher le produit pâteux, en particulier la chair à saucisse, les pâtes ou produits similaires, comportant
une portionneuse (4), comprenant un espace de formage (40), délimité par une partie de paroi destinée à former le produit pâteux,
dans lequel le produit pâteux peut être introduit, et
lequel comporte un orifice de distribution (41a), à travers lequel le produit pâteux divisé en portions peut sortir,
**caractérisé par**
un dispositif de coupe (50) destiné à diviser en portions le produit pâteux introduit dans l'espace de formage (40), lequel comporte un corps de coupe (60) qui peut être introduit au moins partiellement dans l'espace de formage (40).

14. Dispositif selon l'une quelconque des revendications précédentes, **caractérisé par** une bande d'aplatissement, qui peut recevoir le produit pâteux divisé en portions et qui coopère avec au moins une surface de formage destinée à donner une forme au produit pâteux divisé en portions.

15. Dispositif selon l'une quelconque des revendications précédentes, **caractérisé par** des moyens de poussage destinés à transporter le produit pâteux, les moyens de poussage pouvant être activés en discontinu et la synchronisation du fonctionnement discontinu concourant avec le mouvement d'introduction du corps de coupe (60) dans l'espace de formage.
